# EUROPEAN PATENT APPLICATION

(11) **EP 4 685 468 A1**
(43) Date of publication of application: **28.01.2026**
(21) Application number: 25190616.0
(22) Date of filing: 21.07.2025
(51) Int. Cl.: G01N 21/78

(54) **ANALYSIS APPARATUS**

(30) Priority: 23.07.2024 JP 2024117839
(71) Applicant: FUJIFILM Corporation, Tokyo 106-8620 (JP)
(72) Inventor: MIURA, Yoshinobu, Tokyo, 106-8620 (JP)
(74) Representative: Dehns Germany Partnerschaft mbB

(57) **Abstract**

An analysis apparatus (100) includes: a support section (62) that supports an analysis chip (12) at a measurement position; a photometry unit (70) including a light-emitting element (73a, 73b) that irradiates a reaction region of the analysis chip (12) with measurement light, and an area sensor (74) that captures an image of a predetermined imaging range including the reaction region irradiated with the measurement light; a color plate (75) arranged within the imaging range and having a region irradiated with the measurement light; and a processor (90) that performs quantitative analysis of a detection target substance based on a measurement value corresponding to a photometric region brightness value, which is a brightness value of the reaction region extracted from an image acquired from the photometry unit, and that extracts a correction brightness value, which is a brightness value of the color plate, from the image in addition to the photometric region brightness value to correct the measurement value based on the correction brightness value and a correlation between a pre-photometric region brightness value, which is a brightness value of a region corresponding to the reaction region and acquired in advance using a reference plate, and a pre-correction brightness value which is a brightness value of the color plate.

## Description

### BACKGROUND OF THE INVENTION

### 1. Field of the Invention

The present disclosure relates to an analysis apparatus.

### 2. Description of the Related Art

An analysis apparatus that analyzes a specimen sample using an analysis chip on which the specimen sample is spotted is known. In the analysis of the specimen sample, a concentration of a detection target substance contained in the specimen sample is measured by measuring a reaction state between the specimen sample and a reagent. The specimen sample is, for example, blood or urine. As the analysis chip, an analysis chip comprising a reaction region containing a dry reagent is generally used.

In the analysis apparatus, a reaction product generated by the reaction between the detection target substance and the reagent is detected by irradiating a reaction region, on which the specimen sample is added dropwise, of such an analysis chip with measurement light and detecting reflected light thereof. Therefore, the analysis apparatus comprises a photometry unit that irradiates the analysis chip with the measurement light and detects the reflected light. Then, in the analysis apparatus, an optical density of a reflection region is obtained from an amount of the reflected light, and the detection target substance is quantitatively analyzed from the optical density.

Therefore, in the analysis apparatus, the accuracy of the quantification of the detection target substance is affected by the accuracy of the optical density obtained from the amount of the reflected light of the analysis chip.

JP1995-005110A (JP-H07-005110A) describes that, in an analysis apparatus, in a case in which a reflective piece as a standard (hereinafter, referred to as a standard reflective piece) is placed within a visual field of a detector, the standard reflective piece can be used as a reference for correcting a cause of an error in reflectivity calculation such as a variation in a light source lamp light amount.

### SUMMARY OF THE INVENTION

However, JP1995-005110A (JP-H07-005110A) does not describe a specific method of calculating the optical density by correcting the reflectivity of the reagent region by using the reflectivity from the standard reflective piece.

In addition, according to the study by the present inventor, it has been found that the calculation accuracy of the optical density is also lowered due to the variation in an illuminance distribution of light emitted from the light source. The variation in the illuminance distribution is caused by individual differences in the light source, installation errors, deterioration of the light source, and the like.

The technology of the present disclosure has been made in view of the above-described circumstances, and an object of the present disclosure is to provide an analysis apparatus that can perform quantitative analysis with high accuracy even in a case in which a variation occurs in an illuminance distribution.

The present disclosure relates to an analysis apparatus comprising: a support section that supports, at a measurement position, an analysis chip having a reaction region that holds a reagent; a photometry unit including a light-emitting element that irradiates the reaction region of the analysis chip with measurement light, and an area sensor that captures an image of a predetermined imaging range including the reaction region irradiated with the measurement light; a color plate arranged within the imaging range and having a region irradiated with the measurement light; and a processor that acquires the image from the photometry unit to perform quantitative analysis of a detection target substance based on a measurement value corresponding to a photometric region brightness value, which is a brightness value of the reaction region extracted from the acquired image, and that extracts a correction brightness value, which is a brightness value of the color plate, from the image in addition to the photometric region brightness value to correct the measurement value based on the correction brightness value and a correlation between a pre-photometric region brightness value, which is a brightness value of a region corresponding to the reaction region and acquired in advance using a reference plate, and a pre-correction brightness value which is a brightness value of the color plate.

The processor may execute an adjustment operation of acquiring the correlation between the pre-photometric region brightness value and the pre-correction brightness value during a period from activation to start of photometry using the photometry unit.

It is preferable that the adjustment operation is an operation of acquiring, in a state in which the reference plate is arranged at the measurement position, a plurality of images in which light emission amounts of the light-emitting elements are different and acquiring the correlation between the pre-photometric region brightness value and the pre-correction brightness value from the plurality of images.

It is preferable that the correction brightness value is derived from brightness values of a plurality of regions of the color plate.

It is preferable that the analysis chip contains a dry reagent as the reagent.

It is preferable that an optical density of the color plate is 1.5 or less.

With the analysis apparatus according to the present disclosure, even in a case in which an illuminance distribution varies, the quantitative analysis can be performed with high accuracy.

### BRIEF DESCRIPTION OF THE DRAWINGS

Fig. 1 is a schematic diagram showing an overall configuration of an analysis apparatus according to an embodiment.
Fig. 2 is a plan view showing a main part of the analysis apparatus of Fig. 1.
Fig. 3 is a diagram showing a configuration example of an analysis chip.
Fig. 4 is a schematic diagram showing a positional relationship between a schematic configuration of a photometry unit and the analysis chip.
Fig. 5 is a perspective view showing a positional relationship between a main part of the photometry unit and the analysis chip and a color plate.
Fig. 6 is a diagram showing an image captured by an area sensor.
Fig. 7 is a diagram showing images P1 to P6 captured with current values of 0 mA, 6 mA, 9 mA, 15 mA, 19 mA, and 39 mA applied to a light-emitting element.
Fig. 8 is a diagram showing a relationship between a light-emitting element illuminance and a pre-correction brightness value (color plate brightness value).
Fig. 9 is a diagram showing a relationship between the light-emitting element illuminance and a pre-photometric region brightness value.
Fig. 10 is a diagram showing a correlation between the pre-correction brightness value (color plate brightness value) and the pre-photometric region brightness value.

### DESCRIPTION OF THE PREFERRED EMBODIMENTS

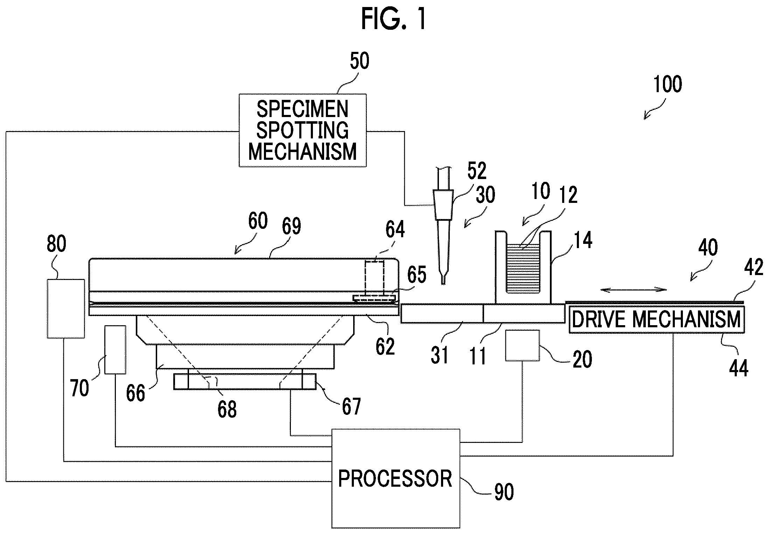

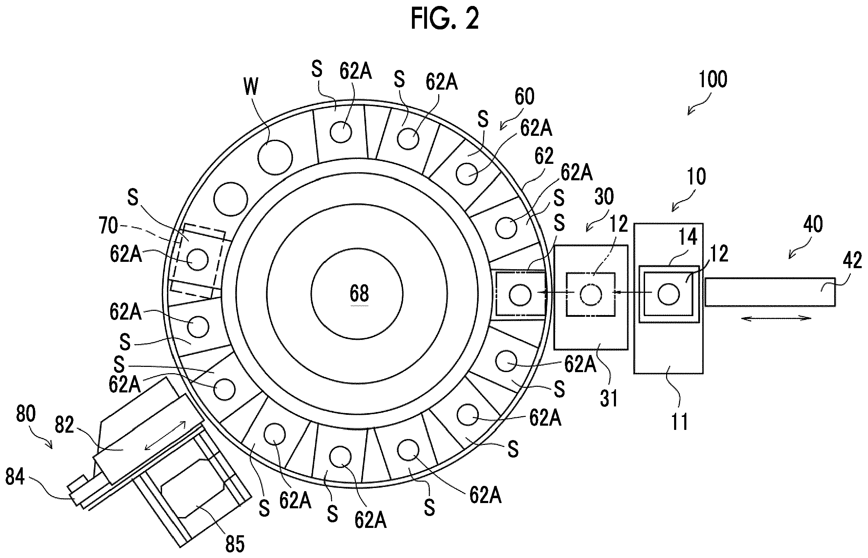

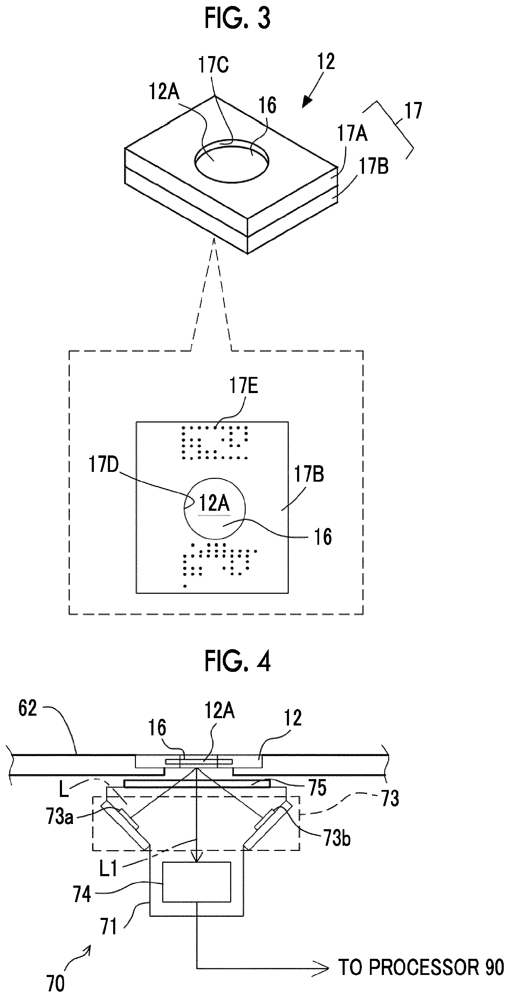

Hereinafter, preferred embodiments of the present disclosure will be described with reference to the drawings. In the drawings, the same reference numerals are given to the same components. Fig. 1 is a schematic diagram showing an overall configuration of an analysis apparatus 100 according to the embodiment. Fig. 2 is a plan view showing a main part of the analysis apparatus 100 of Fig. 1, and Fig. 3 is a diagram showing a configuration example of an analysis chip.

The analysis apparatus 100 shown in Fig. 1 is an example of an analysis apparatus that analyzes a specimen sample. An analysis chip 12 is attachably and detachably loaded into the analysis apparatus 100. In the analysis apparatus 100, for example, a dry analysis chip is used, and a concentration of a detection target substance contained in the specimen sample is measured. Specifically, the analysis apparatus 100 quantitatively determines the concentration of the detection target substance by colorimetric measurement. The specimen sample is, for example, plasma, whole blood, serum, or urine.

As shown in Fig. 3, the analysis chip 12 has a planar reaction region 12A in which a reagent is fixed. The reagent reacts with the detection target substance to generate a substance that develops a specific color. The substance that develops color by this reaction is hereinafter referred to as a reactant. As the reagent, for example, a dry reagent that is in a dry state at least during shipment is used. The specimen sample is spotted onto the reaction region 12A of the analysis chip 12.

More specifically, the analysis chip 12 has a carrier 16 including the reaction region 12A on which the specimen sample is spotted, and the carrier 16 is accommodated in a case 17. The case 17 is composed of a first case 17A and a second case 17B, and accommodates the carrier 16 such that the carrier 16 is sandwiched between the first case 17A and the second case 17B. An opening 17C that functions as a dropwise-addition port for spotting the specimen sample onto the reaction region 12A is formed in the first case 17A. An opening 17D for irradiating the reaction region 12A with light is formed in the second case 17B. The carrier 16 is exposed to the opening 17C of the first case 17A constituting a front surface of the analysis chip 12. In addition, the carrier 16 is exposed to the opening 17D of the second case 17B constituting a back surface of the analysis chip 12. A region exposed to the opening 17D of the carrier 16 constitutes the reaction region 12A in which the reagent is fixed. In addition, item information related to a measurement item is assigned to the second case 17B as information code 17E that is encoded. The information code 17E is, for example, a pattern in which a plurality of dots are arranged, and the arrangement pattern of the dots is varied for each measurement item. It goes without saying that a one-dimensional barcode, a two-dimensional barcode, or the like may be used as the information code 17E.

The analysis apparatus 100 comprises a chip set section 10, a reader 20, a specimen spotting section 30, a chip transport mechanism 40, a specimen spotting mechanism 50, an incubator 60, a photometry unit 70, a chip disposal mechanism 80, and a processor 90.

A stocker 14 that accommodates the analysis chip 12 on a holding table 11 is arranged in the chip set section 10. A plurality of analysis chips 12 are stacked and accommodated in the stocker 14. The stocker 14 has an opening on a bottom surface. The analysis chip 12 is accommodated with a posture in which a surface on which the information code 17E is recorded faces the opening side of the stocker 14. Therefore, in the stocker 14, the information code 17E of the analysis chip 12 located on the lowermost stage on the most opening side is exposed from the opening. In addition, an opening is also formed in the holding table 11 on which the stocker 14 is arranged. Therefore, the information code 17E of the analysis chip 12 located on the lowermost stage in the stocker 14 is exposed to the reader 20 through the opening of the holding table 11 and the opening of the stocker 14. The reader 20 is arranged below the holding table 11 and reads the exposed information code 17E.

The reader 20 is, as an example, a code reader that reads the item information given to the analysis chip 12. The reader 20 is configured with, for example, an image sensor such as a charge-coupled device (CCD) and a complementary metal-oxide-semiconductor (CMOS). The item information read by the reader 20 is output to the processor 90.

The chip transport mechanism 40 transports the analysis chip 12 from the chip set section 10 to the specimen spotting section 30, and further transports the analysis chip 12 from the specimen spotting section 30 to the incubator 60. The chip transport mechanism 40 comprises a thin plate-shaped chip transport member 42 and a drive mechanism 44 that reciprocates the chip transport member 42 in a direction in which the chip set section 10, the specimen spotting section 30, and the incubator 60 are arranged. The drive mechanism 44 is, for example, a linear actuator. The chip transport member 42 is slidably supported by a guide rod (not shown) and is reciprocated by the drive mechanism 44. The chip transport member 42 is pressed against the analysis chip 12 accommodated in the lowermost stage among the analysis chips 12 stacked in the stocker 14. The analysis chip 12 is transported to the incubator 60 side by moving the chip transport member 42 to the incubator 60 side in this state.

In the specimen spotting section 30, the specimen sample such as blood plasma, whole blood, serum, or urine is spotted onto the analysis chip 12. The specimen spotting section 30 is provided with a chip support table 31, and the specimen sample spotting onto the analysis chip 12 transported onto the chip support table 31 is performed on the chip support table 31. The specimen sample is spotted by the specimen spotting mechanism 50 described later. The chip support table 31 is arranged adjacent to the holding table 11.

As shown in Fig. 1, the specimen spotting mechanism 50 comprises a nozzle 52, a suction-and-discharge mechanism (not shown), and a moving mechanism that moves the nozzle 52. The specimen spotting mechanism 50 suctions the specimen sample from a specimen accommodation section (not shown) and spots the specimen sample onto the analysis chip 12 in the specimen spotting section 30.

The incubator 60 can accommodate a plurality of analysis chips 12 inside. The incubator 60 has a constant temperature function of keeping a temperature constant in order to promote the reaction between the reagent and the specimen sample of the analysis chip 12. A set temperature is, for example, 37°C.

As shown in Fig. 2, the incubator 60 comprises an annular rotary substrate 62 provided with a plurality of cells S in which the analysis chip 12 is loaded. **In** addition, a disk-shaped holding member 65 is provided above the rotary substrate 62, the holding member 65 including a pressing member 64 that presses the analysis chip 12 loaded in the cell S in a direction facing the reaction region 12A (see Fig. 3). The pressing member 64 is provided corresponding to each cell S. A slit-shaped space is formed between a pressing surface 64A of the pressing member 64 and the cell S, and the analysis chip 12 is loaded herein. The cells S are sequentially transported to a measurement position at which the photometry unit 70, which will be described later, is arranged, by rotating the rotary substrate 62. The rotary substrate 62 is an example of a support section that supports the analysis chip 12 at the measurement position.

A rotary cylinder 66 is provided below the rotary substrate 62. The rotary cylinder 66 has a substantially inverted triangular cross-sectional shape of which an inner diameter decreases downward. A bearing 67 is arranged below an outer periphery of the rotary cylinder 66, and the rotary cylinder 66 is rotatably supported by the bearing 67. The rotary substrate 62 rotates as the rotary cylinder 66 rotates. It should be noted that the holding member 65 rotates integrally with the rotary substrate 62. The rotary cylinder 66 has an opening at a bottom portion as a vertex portion of an inverted triangle, and this opening functions as a disposal hole 68 for disposing of the used analysis chip 12. The used analysis chip 12 is moved to the center side of the annular rotary substrate 62 from a state of being loaded in the cell S, and is dropped toward an inclined surface of the rotary cylinder 66. The used analysis chip 12 dropped into the rotary cylinder 66 slides on the inclined surface and is disposed of from the disposal hole 68.

A heating unit such as a heater (not shown) is arranged in the holding member 65, and the analysis chip 12 accommodated in the cell S is kept constant at a predetermined temperature by the temperature adjustment. A thermal insulation cover 69 is arranged on an upper surface of the holding member 65. It should be noted that Fig. 2 shows a state in which the holding member 65 and the thermal insulation cover 69 are removed and the rotary substrate 62 is exposed.

As shown in Fig. 2, an opening window 62A for photometry is formed at the center of the bottom surface of each cell S of the rotary substrate 62, and the colorimetric measurement of the analysis chip 12 is performed by the photometry unit 70 arranged below the rotary substrate 62 through the opening window 62A.

The photometry unit 70 performs the colorimetric measurement, which is the measurement of optical density using a colorimetric method, on the analysis chip 12. The photometry unit 70 is provided below the rotary substrate 62 in an outer peripheral portion of the incubator 60. The photometry unit 70 acquires a detection signal representing the optical density of the reaction region 12A of the analysis chip 12, and outputs the detection signal to the processor 90.

Fig. 4 is a diagram showing a positional relationship between a schematic configuration of the photometry unit 70 and the analysis chip 12 during the measurement. As shown in Fig. 4, the photometry unit 70 comprises a housing 71, an irradiation device 73 including light-emitting elements 73a and 73b that irradiate the reaction region 12A with measurement light L, and an area sensor 74 that images the reaction region 12A.

It should be noted that the housing 71 comprises an optical system (not shown) for condensing reflected light L1 from the reaction region 12A and guiding the reflected light L1 to the area sensor 74. In the present example, the light-emitting elements 73a and 73b have the same central wavelength. Here, the same central wavelength means that the central wavelengths match each other in a range of about ± 5 nm.

The wavelength range of the measurement light L is determined in accordance with the detection target substance (that is, the measurement item). For example, in the present example, as described above, the reactant that develops the specific color is generated by the reaction between the detection target substance and the reagent. Since the light emitted from the irradiation device 73 is the measurement light L for detecting whether or not the reactant is generated, the wavelength range is determined in accordance with the color developed by the reactant. The measurement light L of the present example is, for example, light including a wavelength range absorbed by the reactant in order to detect the reactant. In the present example, a configuration has been described in which the two light-emitting elements having the same central wavelength are provided, but the irradiation device 73 may comprise a plurality of light-emitting elements having different central wavelengths in order to emit the measurement light L having different wavelengths depending on the detection target substance. As the light-emitting elements 73a and 73b, for example, a light-emitting diode (LED), organic electro luminescence (EL), or a semiconductor laser is used.

In a case in which the analysis chip 12 is irradiated with the measurement light L, the area sensor 74 captures an image of a predetermined imaging range including the reaction region 12A of the analysis chip 12. The area sensor 74 is, for example, an image sensor such as a CCD camera or a CMOS camera. The area sensor 74 outputs the captured image to the processor 90.

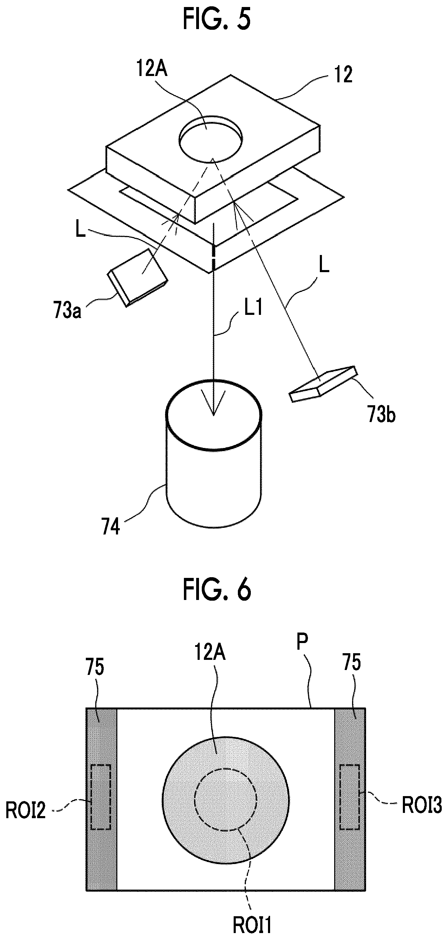

As shown in Fig. 4, a color plate 75 is arranged within the imaging range of the area sensor 74. Fig. 5 is a perspective view showing a positional relationship between a main part of the photometry unit 70 and the color plate 75 and the analysis chip 12 during the measurement. In Fig. 5, the rotary substrate 62 is not shown. The color plate 75 has a region irradiated with the light (measurement light L) emitted from the light-emitting elements 73a and 73b. In the present example, the color plate 75 is a rectangular member having a rectangular opening in a center portion. The measurement light L emitted from the light-emitting elements 73a and 73b passes through the opening of the color plate 75 and is incident on the reaction region 12A. It should be noted that the color plate 75 being arranged within the imaging range of the area sensor 74 does not mean that the entire color plate 75 is arranged within the imaging range, and at least a part of the color plate 75 need only be arranged within the imaging range.

It is preferable that the optical density of the color plate 75 is 1.5 or less. It is preferable that the color plate 75 is a gray plate or a white plate.

The chip disposal mechanism 80 comprises a thin plate-shaped chip transport member 82 and a drive mechanism 84 that reciprocates the chip transport member 82. The chip disposal mechanism 80 inserts the chip transport member 82 into the cell S from the outer peripheral portion of the incubator 60 and pushes the used analysis chip 12 after the measurement to the central portion of the incubator 60 to drop the used analysis chip 12 into the disposal hole 68. The drive mechanism 84 is, for example, a linear actuator. The chip transport member 82 is slidably supported by a guide rod (not shown) and is reciprocated by the drive mechanism 84. It should be noted that a collection box for collecting the used analysis chip 12 is arranged below the disposal hole 68.

The analysis chip 12 is loaded into a slit-shaped space formed between the cell S and the pressing member 64 of the rotary substrate 62 in the incubator 60. The analysis chip 12 is warmed in the incubator 60, and is transported to the measurement position by the rotation of the incubator 60. The measurement position is a position at which the photometry unit 70 is arranged below the rotary substrate 62 and the colorimetric measurement of the analysis chip 12 is performed. The analysis chip 12 on which the colorimetric measurement is performed by the photometry unit 70 is dropped into the disposal hole 68 and is disposed of by the chip disposal mechanism 80.

The processor 90 integrally controls the respective units of the analysis apparatus 100. The configuration of the processor 90 is not particularly limited, but for example, the processor 90 is configured with a central processing unit (CPU), a non-volatile memory (NVM), a random-access memory (RAM), and the like.

The processor 90 acquires the image captured by the area sensor 74 of the photometry unit 70 from the area sensor 74 and performs the quantitative analysis of the detection target substance contained in the specimen sample based on the acquired image. In addition, the processor 90 executes an adjustment operation for the quantitative analysis.

The processor 90 performs the quantitative analysis of the detection target substance based on a measurement value corresponding to a photometric region brightness value that is a brightness value of the reaction region 12A extracted from the image acquired from the photometry unit 70. Specifically, the processor 90 derives the optical density of the reaction region 12A as the measurement value, and derives the concentration of the detection target substance based on a calibration curve showing a relationship between the optical density and the concentration of the detection target substance. In this case, the processor 90 extracts a correction brightness value, which is a brightness value of the color plate in the image, in addition to the photometric region brightness value, corrects the measurement value based on the correction brightness value and a correlation between the pre-photometric region brightness value and the pre-correction brightness value, which will be described later, and then derives the concentration of the detection target substance. Here, "deriving the concentration of the detection target substance" means quantifying the detection target substance.

In addition, as the adjustment operation for correcting the measurement value, the processor 90 executes processing of obtaining a correlation between the pre-photometric region brightness value and the pre-correction brightness value and processing of storing the correlation during a period from the activation of the analysis apparatus 100 to the start of the photometry by the photometry unit 70. Here, the pre-photometric region brightness value is a brightness value of a region corresponding to the reaction region 12A in the image acquired by the photometry unit 70 in a state in which the reference plate is arranged at the measurement position. The pre-correction brightness value is a brightness value of the color plate 75 acquired from the image from which the pre-photometric region brightness value is acquired, and may be referred to as a color plate brightness value in the following description. As the reference plate, for example, a white plate W (see Fig. 2) provided in the rotary substrate 62 for the calibration of the brightness is used.

First, the quantitative analysis method and the adjustment operation will be described with reference to Figs. 6 to 10.

Fig. 6 is a schematic diagram showing an image P acquired from the photometry unit 70 by the processor 90. The image P is an image captured by the area sensor 74 in a state in which the light-emitting elements 73a and 73b are turned on to irradiate the reflection region and the color plate with the measurement light. In the image P, an outer shape of a circular portion at the center is an outer shape of the opening window 62A of the rotary substrate 62. An inner portion of the circular portion is the reaction region 12A of the analysis chip 12 observed from the opening window 62A. In addition, members indicated by gray and located on both sides of the image P are the color plates 75. In the present example, a gray plate is used as the color plate 75.

In a case of the colorimetric measurement of the analysis chip 12, that is, in a case of performing the quantitative analysis of the detection target substance by adding the specimen sample dropwise to the reaction region 12A, the processor 90 executes the following processing.

The imaging is performed by the area sensor 74 in a state in which the light-emitting elements 73a and 73b are turned on to irradiate the analysis chip 12 and the color plate 75 with the measurement light. The area sensor 74 acquires the image P including the reaction region 12A and at least a partial region of the color plate 75 as shown in Fig. 6. The processor 90 acquires the image P from the area sensor 74. The processor 90 sets a predetermined region in the reaction region 12A, for example, a central portion of the reaction region 12A shown in Fig. 6 as a region of interest ROI1, and derives an average value A of brightness data in this range as a photometric region brightness value (hereinafter, a measurement value A). Then, the processor 90 uses the two regions of interest ROI2 and ROI3 of the color plate 75 as the region for extracting the correction brightness data, and derives the average value B of the brightness data of this region as the correction brightness value. Further, the processor 90 corrects the measurement value based on the correction brightness value and the correlation between the pre-photometric region brightness value and the pre-correction brightness value. It should be noted that, here, the "brightness data" includes the brightness values of a plurality of pixels included in a certain region. Therefore, the average value of the brightness data is obtained by dividing the sum of the brightness values of the respective pixels included in the brightness data by the number of pixels. However, as the brightness value, instead of the average value of the brightness data, a median value of the brightness data may be used, or a most frequent value of the brightness data may be used.

The correlation between the pre-photometric region brightness value and the pre-correction brightness value is acquired in advance by the adjustment operation. The adjustment operation executed by the processor 90 is as described below.

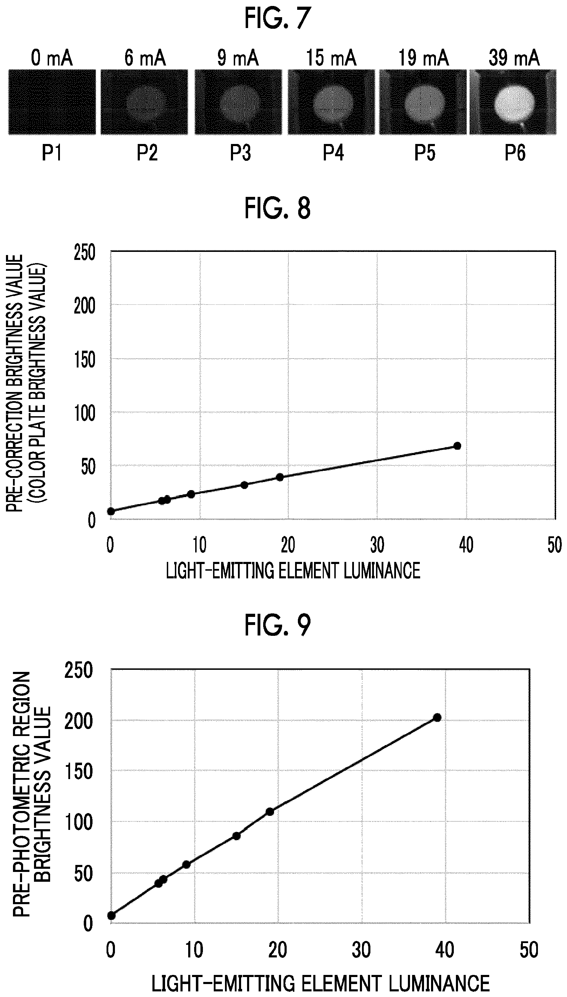

First, the rotary substrate 62 is rotated to arrange the reference plate (for example, the white plate W) at the measurement position. The area sensor 74 acquires a plurality of images including at least a part of the reference plate and the color plate 75 while changing the current value applied to the light-emitting elements 73a and 73b in a state in which the reference plate is arranged at the measurement position. In the image that is acquired here, the reference plate is observed from the opening window 62A of the rotary substrate 62. The light-emitting elements 73a and 73b are, as an example, LEDs. Fig. 7 is a diagram showing images P1 to P6 captured by applying the current values of 0 mA, 6 mA, 9 mA, 15 mA, 19 mA, and 39 mA to the light-emitting elements 73a and 73b. As shown in Fig. 7, the amount of light emission (irradiation amount) by the light-emitting elements 73a and 73b is larger as the current value is larger, and thus a bright (high-brightness) image is acquired.

The correlation between the pre-photometric region brightness value and the pre-correction brightness value is obtained from the plurality of images P1 to P6 having different amounts of light emission of the light-emitting elements 73a and 73b shown in Fig. 7. The method of obtaining the correlation between the pre-photometric region brightness value and the pre-correction brightness value from the plurality of images P1 to P6 is not particularly limited, and any method may be used. Hereinafter, an example thereof will be described.

First, the relationship between the light-emitting element illuminance and the pre-correction brightness value (color plate brightness value) shown in Fig. 8 and the relationship between the light-emitting element illuminance and the pre-photometric region brightness value shown in Fig. 9 are derived from the plurality of images P1 to P6. The color plate brightness value is derived from the brightness data of the regions of interest ROI2 and ROI3 on the color plate 75 from which the correction brightness data is extracted during the quantitative analysis in the image P schematically shown in Fig. 6. Similarly, the pre-photometric region brightness value is derived from the brightness data of the region (that is, the reference plate) corresponding to the region of interest ROI1 of the reaction region 12A from which the photometric region brightness data is extracted during the quantitative analysis in the image P schematically shown in Fig. 6.

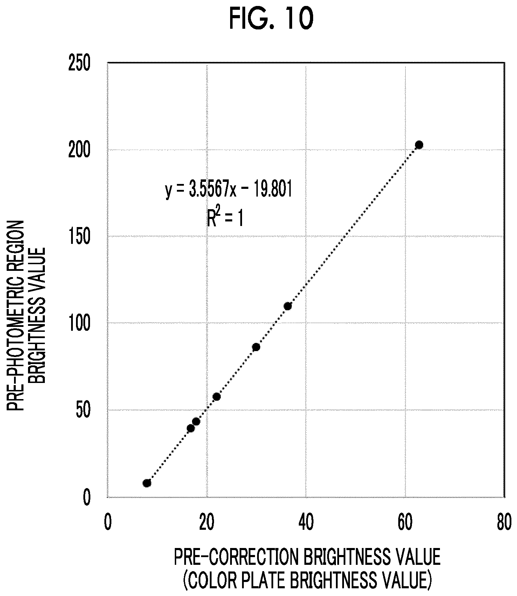

Then, from the relationships shown in Figs. 8 and 9, the correlation between the pre-photometric region brightness value and the color plate brightness value shown in Fig. 10 is obtained. In the example shown in Fig. 10, the correlation between the color plate brightness value x and the pre-photometric region brightness value y is approximated by a linear function y = 3.5567x - 19.801 with a coefficient of determination R² = 1 (y = ax + b, where a = 3.5567 and b = -19.801). The processor 90 stores a relational expression between the color plate brightness value x and the pre-photometric region brightness value y in the memory. The processing of deriving the relational expression and storing the relational expression is processing executed in advance by the adjustment operation.

During the quantitative analysis, the processor 90 corrects the measurement value A, which is the photometric region brightness value, by using the above-described relational expression indicating the correlation between the color plate brightness value and the pre-photometric region brightness value acquired by the adjustment operation. Specifically, a value A/y obtained by dividing the measurement value A by the relational expression y is derived as the corrected measurement value. In a case in which the correlation between the color plate brightness value and the pre-photometric region brightness value is approximated by a linear function represented by a linear function y = ax + b as in Fig. 10, A/(ax + b) is derived as the corrected measurement value. In the example of Fig. 10, A/(3.5567 × B - 19.801) is derived. Here, B is the correction brightness value acquired from the color plate 75 in the image from which the measurement value A is acquired. Then, the processor 90 derives the optical density from the corrected measurement value, and derives the concentration of the detection target substance from the calibration curve based on the optical density obtained from the corrected measurement value.

As a method of correcting the error of the measurement value due to the change in the illuminance by the light-emitting elements 73a and 73b, a correction method of dividing the photometric region brightness value by the correction brightness value of the color plate 75 is considered. However, in a case in which the photometric region brightness value is simply divided by the correction brightness value, sufficient correction may not be performed. Specifically, in a case in which the illuminance distribution changes while the measurement is repeated due to the deterioration of the light-emitting elements 73a and 73b, and the relationship between the illuminance in the reaction region and the illuminance in the color plate changes, it is not possible to perform sufficient correction only by dividing the photometric region brightness value by the correction brightness value of the color plate 75.

In the analysis apparatus 100 according to the present embodiment, the processor 90 extracts the correction brightness value, which is a brightness value of the color plate, from the image in addition to the photometric region brightness value, and corrects the measurement value based on the correction brightness value and the correlation between the pre-photometric region brightness value and the pre-correction brightness value acquired in advance. Accordingly, even in a case in which a change in the illuminance distribution occurs due to deterioration or the like of the light-emitting elements 73a and 73b, the measurement value can be corrected with high accuracy, and as a result, the quantitative analysis with high accuracy can be realized.

As described above, the adjustment operation need only be executed at least once during a period from the activation of the analysis apparatus 100 to the start of the photometry by the photometry unit 70 (here, the start of the quantitative analysis). It is preferable that the adjustment operation is performed immediately before the analysis apparatus 100 starts the colorimetric measurement of the analysis chip 12. This is because the correction can be reflected in the correction of the illuminance distribution immediately before the light-emitting elements 73a and 73b. However, the analysis apparatus 100 may be configured to always execute the adjustment operation at the time of activation. In a case in which the correlation acquired by the adjustment operation is different from the previous time by a predetermined amount or more, an alert can be generated, and can function as a malfunction alert for the analysis apparatus 100. In addition, the adjustment operation may be performed at the time of activation, and in a case in which the colorimetric measurement is performed after a certain period of time has elapsed after the activation of the analysis apparatus 100, the adjustment operation may be performed immediately before the colorimetric measurement.

As described above, it is preferable that the optical density of the color plate 75 is 1.5 or less. It is preferable that the color plate 75 is gray or white. This is because the correction accuracy is improved in a case in which the amount of the reflected light is large and the brightness value of the color plate in the image P captured by the area sensor 74 is high.

In the present embodiment, the two regions of interest ROI2 and ROI3 on the color plate 75 are used, and the average value of the brightness values of the two regions of interest is used as the correction brightness value, but there may be only one region of interest from which the correction brightness data on the color plate 75 is extracted, or there may be three or more regions of interest.

In the above-described embodiment, a case has been described in which the adjustment operation is an operation of acquiring the plurality of images P1 to P6 in which the amounts of light emitted from the light-emitting elements 73a and 73b are different from each other in a state in which the reference plate is arranged at the measurement position and obtaining the correlation between the pre-correction brightness value and the pre-photometric region brightness value from the plurality of images P1 to P6 in which the amounts of light emitted are different from each other. The adjustment operation is not limited to the operation according to the above-described embodiment. For example, the adjustment operation may be an operation in which the current value applied to the light-emitting elements 73a and 73b is fixed, the area sensor 74 acquires the image in a plurality of different light-receiving times (exposure times), and the correlation between the pre-correction brightness value and the pre-photometric region brightness value is obtained from a relationship between the light-receiving time and the pre-photometric region brightness value and a relationship between the light-receiving time and the pre-correction brightness value. In addition, the adjustment operation may be an operation of arranging an aperture capable of changing a size of an opening between the light-emitting elements 73a and 73b and the color plate and the photometric region, acquiring an image with a plurality of different sizes of the openings, and obtaining a correlation between the pre-correction brightness and the pre-photometric region brightness from a relationship between the size of the opening and the pre-correction brightness value and a relationship between the size of the opening and the pre-photometric region brightness value.

The photometry unit 70 of the analysis apparatus 100 according to the above-described embodiment comprises the two light-emitting elements 73a and 73b that emit the light having the same wavelength range, but the number of light-emitting elements that emit the light having the same wavelength range may be three or more or may be one.

Further, in the above-described embodiment, various processors shown below can be used as the hardware structure of the processor 90. The various processors include, in addition to a CPU that is a general-purpose processor that executes software (program) to function as various processing units, a programmable logic device (PLD) of which a circuit configuration can be changed after manufacturing, such as a field-programmable gate array (FPGA), and a dedicated electric circuit that is a processor having a circuit configuration dedicatedly designed for executing specific processing, such as an application specific integrated circuit (ASIC).

The processing described above may be executed by one of the various processors or may be executed by a combination of two or more processors (for example, a combination of a plurality of FPGAs or a CPU and an FPGA) of the same type or different types. Moreover, a plurality of processing units may be configured by one processor. As an example in which the plurality of processing units are configured by one processor, there is a form in which a processor that realizes all functions of a system including the plurality of processing units by using one integrated circuit (IC) chip is used, such as a system on a chip (SOC).

Further, the hardware structure of these processors is, more specifically, an electric circuit (circuitry) in which the circuit elements, such as semiconductor elements, are combined.

In addition to the operation program of the analysis apparatus, the technology of the present disclosure extends to a computer readable storage medium (USB memory or digital versatile disc (DVD)-read only memory (ROM), or the like) that stores the operation program of the analysis apparatus in a non-transitory manner.

It should be noted that the above-described contents and the above-shown contents are for detailed description of the parts according to the technology of the present disclosure and are merely examples of the technology of the present disclosure. For example, the description of the configuration, the function, the operation, and the effect above are the description of examples of the configuration, the function, the operation, and the effect of the parts according to the technology of the present disclosure. As a result, it goes without saying that unnecessary parts may be deleted, new elements may be added, or replacements may be made with respect to the above-described contents and the above-shown contents within a range that does not deviate from the gist of the technology of the present disclosure. In addition, in order to avoid complication and facilitate understanding of the parts according to the technology of the present disclosure, the description related to common technical knowledge or the like that does not need to be particularly described for enabling implementation of the technology of the present disclosure is omitted in the above-described contents and the above-shown contents.

All of the documents, the patent applications, and the technical standards described in the present specification are incorporated into the present specification by reference to the same extent as in a case in which each of the documents, the patent applications, and the technical standards are specifically and individually stated to be described by reference.

In regard to the above-described embodiment, following supplementary notes are further disclosed.

### Supplementary Note 1

An analysis apparatus comprising: a support section that supports, at a measurement position, an analysis chip having a reaction region that holds a reagent; a photometry unit including a light-emitting element that irradiates the reaction region of the analysis chip with measurement light, and an area sensor that captures an image of a predetermined imaging range including the reaction region irradiated with the measurement light; a color plate arranged within the imaging range and having a region irradiated with the measurement light; and a processor that acquires the image from the photometry unit to perform quantitative analysis of a detection target substance based on a measurement value corresponding to a photometric region brightness value, which is a brightness value of the reaction region extracted from the acquired image, and that extracts a correction brightness value, which is a brightness value of the color plate, from the image in addition to the photometric region brightness value to correct the measurement value based on the correction brightness value and a correlation between a pre-photometric region brightness value, which is a brightness value of a region corresponding to the reaction region and acquired in advance using a reference plate, and a pre-correction brightness value which is a brightness value of the color plate.

### Supplementary Note 2

The analysis apparatus according to supplementary note 1, in which the processor executes an adjustment operation of acquiring the correlation between the pre-photometric region brightness value and the pre-correction brightness value during a period from activation to start of photometry using the photometry unit.

### Supplementary Note 3

The analysis apparatus according to supplementary note 2, in which the adjustment operation is an operation of acquiring, in a state in which the reference plate is arranged at the measurement position, a plurality of images in which light emission amounts of the light-emitting elements are different and acquiring the correlation between the pre-photometric region brightness value and the pre-correction brightness value from the plurality of images.

### Supplementary Note 4

The analysis apparatus according to any one of supplementary notes 1 to 3, in which the correction brightness value is derived from brightness values of a plurality of regions of the color plate.

### Supplementary Note 5

The analysis apparatus according to any one of supplementary notes 1 to 4, in which the analysis chip contains a dry reagent as the reagent.

### Supplementary Note 6

The analysis apparatus according to any one of supplementary notes 1 to 5, in which an optical density of the color plate is 1.5 or less.

### Explanation of References

10: chip set section
11: holding table
11A: opening
12: analysis chip
12A: reaction region
14: stocker
16: carrier
17: case
17A: first case
17B: second case
17C: opening
17D: opening
17E: information code
20: reader
30: specimen spotting section
31: chip support table
40: chip transport mechanism
42: chip transport member
44: drive mechanism
50: specimen spotting mechanism
52: nozzle
60: incubator
62: rotary substrate
62A: opening window
64: pressing member
64A: pressing surface
65: holding member
66: rotary cylinder
67: bearing
68: disposal hole
69: thermal insulation cover
70: photometry unit
71: housing
73: irradiation device
74: area sensor
75: color plate
80: chip disposal mechanism
82: chip transport member
84: drive mechanism
90: processor
100: analysis apparatus

## Claims

1. An analysis apparatus (100) comprising:
a support section (62) that supports, at a measurement position, an analysis chip (12) having a reaction region (12A) that holds a reagent;
a photometry unit (70) including a light-emitting element (73a, 73b) that irradiates the reaction region of the analysis chip with measurement light, and an area sensor (74) that captures an image of a predetermined imaging range including the reaction region irradiated with the measurement light;
a color plate (75) arranged within the imaging range and having a region irradiated with the measurement light; and
a processor (90) that acquires the image from the photometry unit to perform quantitative analysis of a detection target substance based on a measurement value corresponding to a photometric region brightness value, which is a brightness value of the reaction region extracted from the acquired image, and that extracts a correction brightness value, which is a brightness value of the color plate, from the image in addition to the photometric region brightness value to correct the measurement value based on the correction brightness value and a correlation between a pre-photometric region brightness value, which is a brightness value of a region corresponding to the reaction region and acquired in advance using a reference plate, and a pre-correction brightness value which is a brightness value of the color plate.

2. The analysis apparatus (100) according to claim 1,
wherein the processor (90) executes an adjustment operation of acquiring the correlation between the pre-photometric region brightness value and the pre-correction brightness value during a period from activation to start of photometry using the photometry unit (70).

3. The analysis apparatus (100) according to claim 2,
wherein the adjustment operation is an operation of acquiring, in a state in which the reference plate is arranged at the measurement position, a plurality of images in which light emission amounts of the light-emitting elements are different and acquiring the correlation between the pre-photometric region brightness value and the pre-correction brightness value from the plurality of images.

4. The analysis apparatus (100) according to any one of claims 1 to 3,
wherein the correction brightness value is derived from brightness values of a plurality of regions of the color plate.

5. The analysis apparatus (100) according to any one of claims 1 to 4,
wherein the analysis chip (12) contains a dry reagent as the reagent.

6. The analysis apparatus (100) according to any one of claims 1 to 5,
wherein an optical density of the color plate (75) is 1.5 or less.
